# EUROPEAN PATENT APPLICATION

(11) **EP 4 489 136 A1**
(43) Date of publication of application: **08.01.2025**
(21) Application number: 23759836.2
(22) Date of filing: 15.02.2023
(51) Int. Cl.: H01M 4/62, C08C 19/02, C08C 19/28, C08F 220/42, C08F 236/04, C08K 7/06, C08L 25/12, H01G 11/38, H01M 4/13, H01M 4/139

(54) **COMPOSITION FOR ELECTROCHEMICAL ELEMENTS, METHOD FOR PRODUCING SAME, BINDER COMPOSITION FOR ELECTROCHEMICAL ELEMENTS, CONDUCTIVE MATERIAL DISPERSION LIQUID FOR ELECTROCHEMICAL ELEMENTS, SLURRY FOR ELECTROCHEMICAL ELEMENT ELECTRODES, ELECTRODE FOR ELECTROCHEMICAL ELEMENTS, AND ELECTROCHEMICAL ELEMENT**

(30) Priority: 28.02.2022 JP 2022030444
(71) Applicant: Zeon Corporation, Tokyo 100-8246 (JP)
(72) Inventor: ASAI Kazuki, Tokyo 100-8246 (JP); NAKAI Akito, Tokyo 100-8246 (JP)
(74) Representative: Maiwald GmbH
(86) International application number: PCT/JP2023/005332
(87) International publication number: WO 2023/162835

(57) **Abstract**

A composition for an electrochemical device contains a polymer that includes a nitrile group-containing monomer unit and either or both of a conjugated diene monomer unit and an alkylene structural unit and that has a structure derived from a specific compound on at least one terminal. The composition has a concentration of divalent or higher-valent metal ions of not less than 5 mass ppm and not more than 4,000 mass ppm.

## Description

### TECHNICAL FIELD

The present disclosure relates to a composition for an electrochemical device and method of producing the same, a binder composition for an electrochemical device, a conductive material dispersion liquid for an electrochemical device, a slurry for an electrochemical device electrode, an electrode for an electrochemical device, and an electrochemical device.

### BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher electrochemical device performance.

An electrode used in an electrochemical device normally includes a current collector and an electrode mixed material layer formed on the current collector. This electrode mixed material layer is formed by, for example, applying a slurry that contains an electrode active material, a binder-containing binder composition, and so forth onto a current collector and then drying the applied slurry.

In recent years, attempts have been made to improve binder compositions used in the formation of electrode mixed material layers with the aim of achieving even better electrochemical device performance. For example, studies are being conducted in relation to a technique of using a polymer that includes a nitrile group-containing monomer unit as a binder contained in a binder composition (for example, refer to Patent Literature (PTL) 1 to 3).

### CITATION LIST

### Patent Literature

PTL 1: WO2016/103730A1
PTL 2: JP6870772B1
PTL 3: JP2018-160421A

### SUMMARY

### (Technical Problem)

When a composition for an electrochemical device is used to produce an electrode for an electrochemical device, it is necessary for the composition to increase flexibility of the obtained electrode and to inhibit cracking of an electrode active material in the electrode. However, there is room for further improvement with regard to these points in the conventional technique described above.

Accordingly, one object of the present disclosure is to provide a composition for an electrochemical device and a method of producing the same that can increase flexibility of an obtained electrode and inhibit cracking of an electrode active material in the electrode.

Another object of the present disclosure is to provide a binder composition for an electrochemical device, a conductive material dispersion liquid for an electrochemical device, and a slurry for an electrochemical device electrode that can increase flexibility of an obtained electrode and inhibit cracking of an electrode active material in the electrode.

Yet another object of the present disclosure is to provide an electrode for an electrochemical device that has excellent flexibility and little occurrence of electrode active material cracking and an electrochemical device that includes this electrode for an electrochemical device.

### (Solution to Problem)

The inventors conducted diligent investigation with the aim of solving the problems set forth above. The inventors made a new discovery that through a composition for an electrochemical device that contains a polymer including a nitrile group-containing monomer unit and either or both of a conjugated diene monomer unit and an alkylene structural unit and having a structure derived from a specific compound on at least one terminal and that has a concentration of divalent or higher-valent metal ions of not less than 5 mass ppm and not more than 4,000 mass ppm, it is possible to increase flexibility of an obtained electrode and inhibit cracking of an electrode active material in the electrode. In this manner, the inventors completed the present disclosure.
[1] Specifically, with the aim of advantageously solving the problems set forth above, a presently disclosed composition for an electrochemical device comprises a polymer including a nitrile group-containing monomer unit and either or both of a conjugated diene monomer unit and an alkylene structural unit, wherein
   at least one terminal of the polymer has a structure derived from a compound represented by formula (1) or (2), shown below, 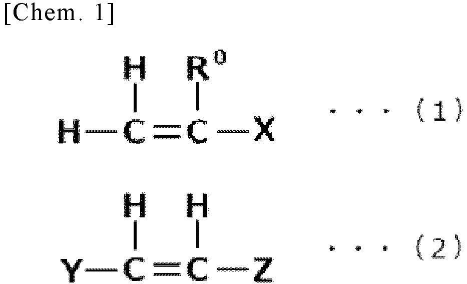 where, in formulae (1) and (2):
   R⁰ is an alkyl group having a carbon number of 10 or less or a hydrogen atom;
   X is a carboxyl group, a trimethoxysilyl group, an alkyl group having a carbon number of 10 or less that includes a substituent R¹, a phenyl group that includes a substituent R², CO(OCH₂CH₂)ₙ₁OR³, or CO(OCH₂CH₂)ₙ₂R⁴, where R¹ and R² are, independently of each other, a hydroxyl group, a carboxyl group, an amino group, a hydroxyphenyl group, or a methoxyphenyl group, R³ and R⁴ are, independently of each other, an alkyl group having a carbon number of 10 or less, a phosphate group, a sulfo group, or a phenyl group, and n1 and n2 are, independently of each other, an integer of not less than 1 and not more than 100;
   Y is a carboxyl group or an alkyl group having a carbon number of 2 or less that optionally includes a substituent R⁵, where R⁵ is a hydroxyl group or a carboxyl group; and
   Z is a carboxyl group or an alkyl group having a carbon number of 10 or less that includes a substituent R⁵, where R⁵ is a hydroxyl group or a carboxyl group, and
   concentration of divalent or higher-valent metal ions contained in the composition for an electrochemical device is not less than 5 mass ppm and not more than 4,000 mass ppm.

Through the composition set forth above, it is possible to increase flexibility of an obtained electrode and inhibit cracking of an electrode active material in the electrode.

The phrase "includes a monomer unit" as used in the present disclosure means that "a polymer obtained with the monomer includes a repeating unit derived from the monomer". The phrase "includes an alkylene structural unit" means that "a repeating unit composed of only an alkylene structure represented by a general formula -CₙH₂ₙ- (n is an integer of 2 or more) is included in a polymer". Moreover, the proportions in which a polymer includes monomer units and structural units can be measured by a nuclear magnetic resonance (NMR) method such as ¹H-NMR or ¹³C-NMR. Furthermore, the phrase "optionally includes a substituent" means substituted or unsubstituted. Also, the "concentration of divalent or higher-valent metal ions" can be measured by ICP emission spectroscopy (ICP-AES).

[2] Moreover, with the aim of advantageously solving the problems set forth above, a presently disclosed method of producing a composition for an electrochemical device is a method of producing a composition for an electrochemical device that contains a polymer including a nitrile group-containing monomer unit and either or both of a conjugated diene monomer unit and an alkylene structural unit, comprising
modifying at least one terminal of a polymer including a nitrile group-containing monomer unit and either or both of a conjugated diene monomer unit and an alkylene structural unit using a compound derived from formula (1) or (2), shown below, 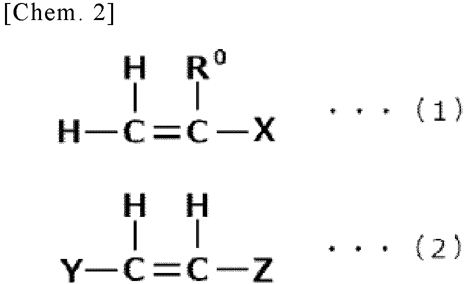 where, in formulae (1) and (2),
R⁰ is an alkyl group having a carbon number of 10 or less or a hydrogen atom,
X is a carboxyl group, a trimethoxysilyl group, an alkyl group having a carbon number of 10 or less that includes a substituent R¹, a phenyl group that includes a substituent R², CO(OCH₂CH₂)ₙ₁OR³, or CO(OCH₂CH₂)ₙ₂R⁴, where R¹ and R² are, independently of each other, a hydroxyl group, a carboxyl group, an amino group, a hydroxyphenyl group, or a methoxyphenyl group, R³ and R⁴ are, independently of each other, an alkyl group having a carbon number of 10 or less, a phosphate group, a sulfo group, or a phenyl group, and n1 and n2 are, independently of each other, an integer of not less than 1 and not more than 100,
Y is a carboxyl group or an alkyl group having a carbon number of 2 or less that optionally includes a substituent R⁵, where R⁵ is a hydroxyl group or a carboxyl group, and
Z is a carboxyl group or an alkyl group having a carbon number of 10 or less that includes a substituent R⁵, where R⁵ is a hydroxyl group or a carboxyl group; and
purifying a composition obtained through the modifying such that concentration of divalent or higher-valent metal ions is not less than 5 mass ppm and not more than 4,000 mass ppm.

Through the production method set forth above, it is possible to efficiently produce the presently disclosed composition for an electrochemical device.
[3] Furthermore, with the aim of advantageously solving the problems set forth above, a presently disclosed binder composition for an electrochemical device comprises: the composition for an electrochemical device according to the foregoing [1]; N-methyl-2-pyrrolidone; and a halogenated hydrocarbon. Through the binder composition set forth above, it is possible to increase flexibility of an obtained electrode and inhibit cracking of an electrode active material in the electrode.
[4] Also, with the aim of advantageously solving the problems set forth above, a presently disclosed conductive material dispersion liquid for an electrochemical device comprises: the composition for an electrochemical device according to the foregoing [1] or the binder composition for an electrochemical device according to the foregoing [3]; and a conductive material. Through the conductive material dispersion liquid set forth above, it is possible to increase flexibility of an obtained electrode and inhibit cracking of an electrode active material in the electrode.
[5] In the conductive material dispersion liquid for an electrochemical device according to the foregoing [4], the conductive material is preferably one or more carbon nanotubes. When the conductive material is carbon nanotubes, this enables formation of good electrical conduction paths.
[6] Moreover, with the aim of advantageously solving the problems set forth above, a presently disclosed slurry for an electrochemical device electrode comprises: the conductive material dispersion liquid for an electrochemical device according to the foregoing [4] or [5]; and an electrode active material. By using the slurry for an electrode set forth above, it is possible to increase flexibility of an obtained electrode and inhibit cracking of an electrode active material in the electrode.
[7] Furthermore, with the aim of advantageously solving the problems set forth above, a presently disclosed electrode for an electrochemical device comprises an electrode mixed material layer formed using the slurry for an electrochemical device electrode according to the foregoing [6] on a current collector. An electrode that includes an electrode mixed material layer obtained using the slurry for an electrode set forth above has excellent flexibility and little occurrence of electrode active material cracking.
[8] Also, with the aim of advantageously solving the problems set forth above, a presently disclosed electrochemical device comprises the electrode for an electrochemical device according to the foregoing [7]. An electrochemical device that includes the electrode set forth above has excellent device characteristics.

### (Advantageous Effect)

According to the present disclosure, it is possible to provide a composition for an electrochemical device and a method of producing the same that can increase flexibility of an obtained electrode and inhibit cracking of an electrode active material in the electrode.

Moreover, according to the present disclosure, it is possible to provide a binder composition for an electrochemical device, a conductive material dispersion liquid for an electrochemical device, and a slurry for an electrochemical device electrode that can increase flexibility of an obtained electrode and inhibit cracking of an electrode active material in the electrode.

Furthermore, according to the present disclosure, it is possible to provide an electrode for an electrochemical device that has excellent flexibility and little occurrence of electrode active material cracking and an electrochemical device that includes this electrode for an electrochemical device.

### DETAILED DESCRIPTION

The following provides a detailed description of embodiments of the present disclosure.

The presently disclosed composition for an electrochemical device and the presently disclosed binder composition for an electrochemical device can be used in production of the presently disclosed conductive material dispersion liquid for an electrochemical device. Moreover, the presently disclosed conductive material dispersion liquid for an electrochemical device can be used to produce the presently disclosed slurry for an electrochemical device electrode through compounding with an electrode active material. Furthermore, the presently disclosed slurry for an electrochemical device electrode that is produced using the conductive material dispersion liquid for an electrochemical device can be used in formation of an electrode of an electrochemical device such as a lithium ion secondary battery. Also, a feature of the presently disclosed electrochemical device is that it includes the presently disclosed electrode for an electrochemical device that is formed using the slurry for an electrochemical device electrode.

### (Composition for electrochemical device)

The presently disclosed composition for an electrochemical device is a composition for an electrochemical device that contains a polymer including a nitrile group-containing monomer unit and either or both of a conjugated diene monomer unit and an alkylene structural unit and in which at least one terminal of the polymer has a structure derived from a compound represented by formula (1) or (2), shown below. 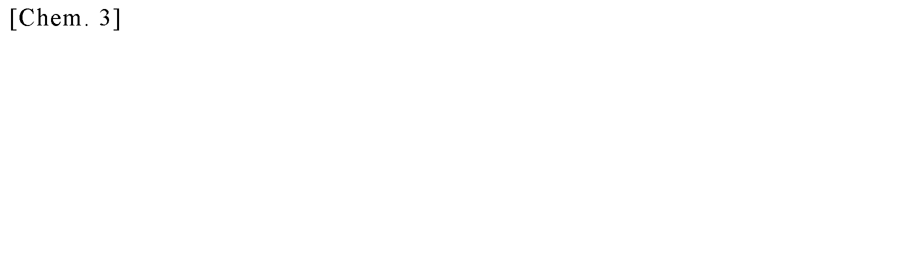 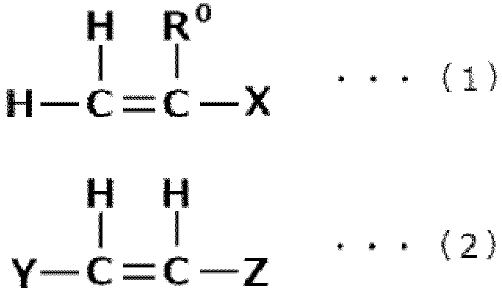 [In formulae (1) and (2):
R⁰ is an alkyl group having a carbon number of 10 or less or a hydrogen atom;
X is a carboxyl group, a trimethoxysilyl group, an alkyl group having a carbon number of 10 or less that includes a substituent R¹, a phenyl group that includes a substituent R², CO(OCH₂CH₂)ₙ₁OR³, or CO(OCH₂CH₂)ₙ₂R⁴, where R¹ and R² are, independently of each other, a hydroxyl group, a carboxyl group, an amino group, a hydroxyphenyl group, or a methoxyphenyl group, R³ and R⁴ are, independently of each other, an alkyl group having a carbon number of 10 or less, a phosphate group, a sulfo group, or a phenyl group, and n1 and n2 are, independently of each other, an integer of not less than 1 and not more than 100;
Y is a carboxyl group or an alkyl group having a carbon number of 2 or less that optionally includes a substituent R⁵, where R⁵ is a hydroxyl group or a carboxyl group; and
Z is a carboxyl group or an alkyl group having a carbon number of 10 or less that includes a substituent R⁵, where R⁵ is a hydroxyl group or a carboxyl group.]

Moreover, the concentration of divalent or higher-valent metal ions contained in the presently disclosed composition for an electrochemical device is not less than 5 mass ppm and not more than 4,000 mass ppm.

An electrode that is formed using the presently disclosed composition for an electrochemical device has excellent flexibility and can inhibit cracking of an electrode active material in the electrode. Although the reason for this is not clear, it is presumed to be as follows. Firstly, it is thought that when a polymer includes a nitrile group-containing monomer unit and either or both of a conjugated diene monomer unit and an alkylene structural unit and also has a terminal structure derived from a specific compound, this polymer can retain high flexibility due to the inclusion of a nitrile group-containing monomer unit and either or both of a conjugated diene monomer unit and an alkylene structural unit and can also protect an electrode active material well and inhibit cracking of the electrode active material in an electrode. In addition, the concentration of divalent or higher-valent metal ions being within the specific range set forth above is thought to enable good formation of an SEI (Solid Electrolyte Interphase) film at the surface of the electrode active material, which is also thought to enable good inhibition of cracking of the electrode active material.

### <Polymer>

The polymer includes a nitrile group-containing monomer unit and either or both of a conjugated diene monomer unit and an alkylene structural unit and also has a structure derived from a specific compound on at least one terminal. This polymer (hereinafter, also referred to as a "nitrile polymer") is a component that, in an electrode mixed material layer formed using the composition for an electrochemical device, can function as a binder that holds an electrode active material and the like so that they do not detach from a current collector. Moreover, in a conductive material dispersion liquid produced using a binder composition, the polymer can also function as a dispersant that can cause dispersion of a conductive material.

The nitrile polymer may, more specifically, be a polymer that includes a conjugated diene monomer unit and a nitrile group-containing monomer unit, a hydrogenated polymer obtained through hydrogenation of the aforementioned polymer, or the like. In a case in which the polymer including a conjugated diene monomer unit and a nitrile group-containing monomer unit is completely hydrogenated, the resultant polymer includes an alkylene structural unit and a nitrile group-containing monomer unit, whereas in a case in which the polymer including a conjugated diene monomer unit and a nitrile group-containing monomer unit is partially hydrogenated, the resultant polymer includes a conjugated diene monomer unit, an alkylene structural unit, and a nitrile group-containing monomer unit.

### «Chemical composition»

### [Nitrile group-containing monomer unit]

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Note that one nitrile group-containing monomer may be used individually, or two or more nitrile group-containing monomers may be used in combination in a freely selected ratio. Of these nitrile group-containing monomers, acrylonitrile is preferable.

The proportional content of nitrile group-containing monomer units in the nitrile polymer when all repeating units in the nitrile polymer are taken to be 100 mass% is preferably 10 mass% or more, more preferably 15 mass% or more, and even more preferably 20 mass% or more, and is preferably 50 mass% or less, more preferably 45 mass% or less, and even more preferably 40 mass% or less. When the proportional content of nitrile group-containing monomer units is within any of the ranges set forth above, dispersion stability of a conductive material dispersion liquid can be increased. Moreover, peel strength of an electrode obtained using a binder composition can be even further improved.

### [Conjugated diene monomer unit]

Examples of conjugated diene monomers that can form a conjugated diene monomer unit include conjugated diene compounds having a carbon number of 4 or more such as 1,3-butadiene, isoprene, 2,3-dimethyl-1,3-butadiene, 2-ethyl-1,3-butadiene, and 1,3-pentadiene. Of these conjugated diene monomers, isoprene and 1,3-butadiene are preferable.

### [Alkylene structural unit]

An alkylene structural unit is a repeating unit that is composed of only an alkylene structure represented by a general formula: -CₙH₂ₙ- (n is an integer of 2 or more). Although the alkylene structural unit may be linear or branched, the alkylene structural unit is preferably linear (i.e., is preferably a linear alkylene structural unit) from a viewpoint of lowering resistance of an electrode while also improving rate characteristics of an electrochemical device. Moreover, the carbon number of the alkylene structural unit is preferably 4 or more (i.e., n in the preceding general formula is preferably an integer of 4 or more).

Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which the alkylene structural unit is introduced into the polymer. For example, the following methods (1) and (2) may be used.
(1) A method in which a polymer is produced from a monomer composition containing a conjugated diene monomer and is then hydrogenated to convert a conjugated diene monomer unit to an alkylene structural unit
(2) A method in which a polymer is produced from a monomer composition containing a 1-olefin monomer

Of these methods, method (1) is preferable in terms of ease of production of the polymer.

In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).

Examples of the 1-olefin monomer include ethylene, propylene, 1-butene, and 1-hexene.

One of these conjugated diene monomers or 1-olefin monomers may be used individually, or two or more of these conjugated diene monomers or 1-olefin monomers may be used in combination.

The total proportional content of conjugated diene monomer units and alkylene structural units in the nitrile polymer when all repeating units (total of structural units and monomer units) in the polymer are taken to be 100 mass% is preferably 50 mass% or more, more preferably 55 mass% or more, and particularly preferably 60 mass% or more, and is preferably 90 mass% or less, more preferably 85 mass% or less, and particularly preferably 80 mass% or less. When the total proportional content of conjugated diene monomer units and alkylene structural units in the polymer is within any of the ranges set forth above, dispersion stability of a conductive material dispersion liquid and cycle characteristics of an electrochemical device can be improved.

Note that in a case in which the nitrile polymer only includes either an alkylene structural unit or a conjugated diene monomer unit, the proportion thereof preferably satisfies any of the ranges set forth above.

### [Other repeating units]

Examples of other repeating units include, but are not specifically limited to, an aromatic vinyl monomer unit, an acidic group-containing monomer unit, and a (meth)acrylic acid ester monomer unit. Note that the nitrile polymer may include one type of other repeating unit or may include two or more types of other repeating units.

Also note that in the present disclosure, "(meth)acryl" indicates "acryl" and/or "methacryl".

Examples of aromatic vinyl monomers that can form an aromatic vinyl monomer unit include styrene, α-methylstyrene, p-t-butylstyrene, butoxystyrene, vinyltoluene, chlorostyrene, and vinylnaphthalene. Note that one aromatic vinyl monomer may be used individually, or two or more aromatic vinyl monomers may be used in combination in a freely selected ratio. Of these aromatic vinyl monomers, styrene is preferable.

Examples of acidic group-containing monomers that can form an acidic group-containing monomer unit include carboxyl group-containing monomers, sulfo group-containing monomers, and phosphate group-containing monomers. Note that one acidic group-containing monomer may be used individually, or two or more acidic group-containing monomers may be used in combination in a freely selected ratio.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxyl group through hydrolysis can also be used as a carboxyl group-containing monomer. Of these examples, acrylic acid and methacrylic acid are preferable as carboxyl group-containing monomers.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" indicates "allyl" and/or "methallyl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Note that in the present disclosure, "(meth)acryloyl" indicates "acryloyl" and/or "methacryloyl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Note that one (meth)acrylic acid ester monomer may be used individually, or two or more (meth)acrylic acid ester monomers may be used in combination in a freely selected ratio.

The proportional content of other repeating units in the nitrile polymer when all repeating units in the nitrile polymer are taken to be 100 mass% is preferably not less than 0 mass% and not more than 30 mass%, more preferably not less than 0 mass% and not more than 20 mass%, even more preferably not less than 0 mass% and not more than 10 mass%, and particularly preferably not less than 0 mass% and not more than 5 mass%.

### <<Structure>>

The nitrile polymer has a structure derived from a compound represented by formula (1) or (2), shown below, on at least one terminal. 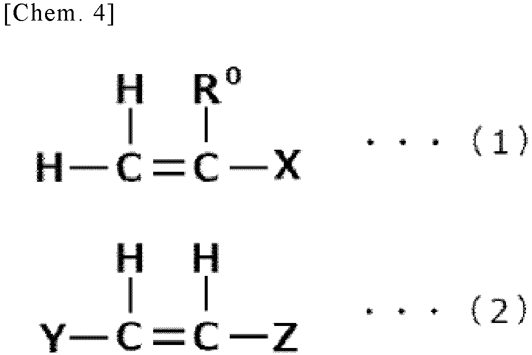 [In formulae (1) and (2):
R⁰ is an alkyl group having a carbon number of 10 or less or a hydrogen atom;
X is a carboxyl group, a trimethoxysilyl group, an alkyl group having a carbon number of 10 or less that includes a substituent R¹, a phenyl group that includes a substituent R², CO(OCH₂CH₂)ₙ₁OR³, or CO(OCH₂CH₂)ₙ₂R⁴, where R¹ and R² are, independently of each other, a hydroxyl group, a carboxyl group, an amino group, a hydroxyphenyl group, or a methoxyphenyl group, R³ and R⁴ are, independently of each other, an alkyl group having a carbon number of 10 or less, a phosphate group, a sulfo group, or a phenyl group, and n1 and n2 are, independently of each other, an integer of not less than 1 and not more than 100;
Y is a carboxyl group or an alkyl group having a carbon number of 2 or less that optionally includes a substituent R⁵, where R⁵ is a hydroxyl group or a carboxyl group; and
Z is a carboxyl group or an alkyl group having a carbon number of 10 or less that includes a substituent R⁵, where R⁵ is a hydroxyl group or a carboxyl group.]

In particular:
R⁰ is preferably an alkyl group having a carbon number of 2 or less that does not include a substituent or a hydrogen atom;
X is preferably a carboxyl group, a trimethoxysilyl group, an alkyl group having a carbon number of 10 or less that includes a substituent R¹ (where it is preferable that the carbon number is 3 or less and the substituent R¹ is any one of a hydroxyl group, a carboxyl group, an amino group, a hydroxyphenyl group, and a methoxyphenyl group), a phenyl group that includes a substituent R² (where it is preferable that the substituent R² is a carboxyl group), CO(OCH₂CH₂)ₙ₁OR³ (where it is preferable that n1 is an integer of 50 or less and R³ is an alkyl group having a carbon number of 2 or less, a phosphate group, or a sulfo group), or CO(OCH₂CH₂)ₙ₂R⁴ (where it is preferable that n2 is an integer of 50 or less and R⁴ is an alkyl group having a carbon number of 2 or less, a phosphate group, or a sulfo group);
Y is preferably a carboxyl group, an alkyl group having a carbon number of 2 or less that includes a substituent R⁵ (where it is preferable that R⁵ is a hydroxyl group or a carboxyl group), or an alkyl group having a carbon number of 2 or less that does not include a substituent; and
Z is preferably a carboxyl group or an alkyl group having a carbon number of 2 or less that includes a substituent R⁵ (where it is preferable that R⁵ is a hydroxyl group or a carboxyl group).

More specifically, among compounds represented by formula (1), 3-buten-1-amine, vinyltrimethoxysilane, methoxy polyalkylene glycol methacrylate (n1 = 23), 2-methacryloyloxyethyl acid phosphate, 2-(methacryloyloxy)ethanesulfonic acid, 3-buten-1-ol, 4-penten-2-ol, acrylic acid, vinylacetic acid, 4-vinylbenzoic acid, allyl alcohol, o-allylphenol, p-allylphenol, o-allylanisole, p-allylanisole, and allylamine are preferable, and 3-buten-1-amine, vinyltrimethoxysilane, methoxy polyalkylene glycol methacrylate (n1 = 23), 2-methacryloyloxyethyl acid phosphate, and 2-(methacryloyloxy)ethanesulfonic acid are more preferable.

In a situation in which a compound represented by formula (1) is used to perform terminal modification of the nitrile polymer, the compound is split at the central carbon-carbon double bond, mainly resulting in the side of the structure where the group X is located becoming bonded to a terminal of the nitrile polymer. In the following description, such a compound is also referred to as a "single-terminal modifying compound". Among various characteristics, particularly electrode flexibility can be effectively increased through a single-terminal modifying compound.

Moreover, among compounds represented by formula (2), cis-2-butene-1,4-diol, maleic acid, cis-3-hexen-1-ol, and trans-3-pentenoic acid are preferable, and cis-2-butene-1,4-diol and maleic acid are more preferable.

In a situation in which a compound represented by formula (2) is used to perform terminal modification of the nitrile polymer, the compound splits at the central carbon-carbon double bond, resulting in a structure including the group Y and a structure including the group Z each independently becoming bonded to a terminal of the nitrile polymer. In the following description, such a compound is also referred to as a "double-terminal modifying compound". Among various characteristics, particularly an effect of inhibiting cracking of an electrode active material in an electrode can be effectively increased through a double-terminal modifying compound.

Moreover, when a compound represented by formula (1) or (2) includes a functional group such as an acid group or a base or includes a specific structure such as a polyethylene glycol chain (-(OCH₂CH₂)ₙ₁-), dispersibility of a conductive material can be increased in a situation in which a conductive composition is produced, and peel strength of an obtained electrode can be increased. Note that from a viewpoint of even further enhancing these effects (i.e., an effect of improving dispersibility of a conductive material and an effect of improving peel strength of an electrode), it is preferable that the compound represented by formula (1) or (2) includes a functional group such as an acid group or a base.

### -Method of identification of terminal structure-

The terminal structure of the nitrile polymer can be identified by NMR or GC-MS.

### (1) NMR

The terminal structure of the nitrile polymer can be identified by removing a solvent component from the composition for an electrochemical device that is a subject of identification using a rotary evaporator, further performing 24 hours of vacuum drying at 60°C, dissolving the resultant dried product in deuterated chloroform, and identifying the terminal structure by ¹H-NMR and ¹³C-NMR.

### (2) GC-MS

Extraction is performed in accordance with JIS K6229 using methanol so as to remove free chain transfer agent and the like from the composition for an electrochemical device. The nitrile polymer is then dried, and gas released upon 20 minutes of heating of the dried nitrile polymer at 300°C is measured by gas chromatography-mass spectrometry. In addition, the chain transfer agent used in production of the nitrile polymer is identified by ¹H-NMR, a standard material for the identified chain transfer agent is measured, and the structure of molecular terminals of the nitrile polymer is identified/quantified from the retention time, MS spectrum, and peak area. Note that the measurement conditions in gas chromatography-mass spectrometry may be as follows, for example.
Separation column: HP-5ms (length 30 m, internal diameter 0.25 mm, film thickness 0.25 µm)
Heating temperature of column oven: Held at 40°C for 3 minutes and then raised to 280°C at 10°C/min
Injection temperature: 300°C
Detector temperature: 280°C
Measured ions: 29 to 550

### <<Properties>>

Although no specific limitations are made, it is preferable that the nitrile polymer has the following properties.

### [Weight-average molecular weight]

The weight-average molecular weight of the nitrile polymer is preferably 5,000 or more, more preferably 10,000 or more, and even more preferably 15,000 or more, and is preferably 150,000 or less, more preferably 100,000 or less, and even more preferably 80,000 or less. When the weight-average molecular weight of the nitrile polymer is not less than any of the lower limits set forth above, peel strength of an obtained electrode can be increased. On the other hand, when the weight-average molecular weight of the nitrile polymer is not more than any of the upper limits set forth above, dispersion stability of a conductive material dispersion liquid can be increased.

Note that the "weight-average molecular weight" referred to in the present disclosure can be measured by a method described in the EXAMPLES section.

### [Iodine value]

The iodine value of the nitrile polymer is preferably 60 mg/100 mg or less, more preferably 50 mg/100 mg or less, and even more preferably 30 mg/100 mg or less. When the iodine value of the nitrile polymer is not more than any of the upper limits set forth above, device characteristics (cycle characteristics, etc.) of an electrochemical device can be improved. Note that the lower limit for the iodine value of the nitrile polymer is not specifically limited and may be 1 mg/100 mg or more, for example.

Also note that the "iodine value" referred to in the present disclosure can be measured by a method described in the EXAMPLES section.

### <Concentration of divalent or higher-valent metal ions in composition>

The concentration of divalent or higher-valent metal ions in the presently disclosed composition for an electrochemical device is required to be not less than 5 mass ppm and not more than 4,000 mass ppm, is preferably 10 mass ppm or more, and more preferably 50 mass ppm or more, and is preferably 3,000 mass ppm or less, and more preferably 2,000 mass ppm or less. When the concentration of divalent or higher-valent metal ions is not less than any of the lower limits set forth above, cracking of an electrode active material in an obtained electrode can be inhibited well, and peel strength of the electrode can be increased. When the concentration of divalent or higher-valent metal ions is not more than any of the upper limits set forth above, dispersion stability of a conductive material can be increased in a situation in which a conductive material dispersion liquid is produced, and cycle characteristics of an obtained electrochemical device can be enhanced.

Examples of divalent or higher-valent metal ions that can be contained in the composition include, but are not specifically limited to, aluminum ions (trivalent), calcium ions (divalent), magnesium ions (divalent), barium ions (divalent), zinc ions (divalent), lead ions (divalent), iron ions (divalent, trivalent), copper ions (divalent), ruthenium ions (divalent, trivalent, tetravalent), rhodium ions (tetravalent), palladium ions (divalent, tetravalent), nickel ions (divalent), manganese ions (divalent, tetravalent, heptavalent), cobalt ions (divalent, trivalent), chromium ions (divalent, trivalent, hexavalent), molybdenum ions (tetravalent, hexavalent), and tungsten ions (hexavalent).

### <Other components>

The presently disclosed composition for an electrochemical device can contain any additives. These additives are not specifically limited so long as they do not affect battery reactions and can be selected from commonly known additives such as those described in WO2012/115096A1, for example.

Moreover, the presently disclosed composition for an electrochemical device can contain a halogenated hydrocarbon in the same manner as the presently disclosed binder composition described further below, for example. Note that the halogenated hydrocarbon may be a residue of a halogenated hydrocarbon that was used as a reaction solvent or the like in a production step of the composition for an electrochemical device, for example. Specifically, the halogenated hydrocarbon may be any of the various halogenated hydrocarbons (compounds in which at least one carbon atom of a hydrocarbon has been substituted with a halogen atom) that are listed as examples in the "(Binder composition for electrochemical device) <Halogenated hydrocarbon>" section further below. The content of the halogenated hydrocarbon in the composition for an electrochemical device is preferably 2 mass ppm or more, more preferably 10 mass ppm or more, and even more preferably 30 mass ppm or more relative to the content of the nitrile polymer, and is preferably 400 mass ppm or less, more preferably 350 mass ppm or less, and even more preferably 300 mass ppm or less relative to the content of the nitrile polymer. When the content of the halogenated hydrocarbon is not less than any of the lower limits set forth above relative to the content of the nitrile polymer, peel strength of an obtained electrode can be increased. On the other hand, when the content of the halogenated hydrocarbon is not more than any of the upper limits set forth above relative to the content of the nitrile polymer, dispersion stability of an obtained conductive material dispersion liquid can be increased. Note that the content of the halogenated hydrocarbon can be measured by gas chromatography.

### (Method of producing composition for electrochemical device)

The presently disclosed method of producing a composition for an electrochemical device is a method of producing a composition for an electrochemical device that contains a polymer including a nitrile group-containing monomer unit and either or both of a conjugated diene monomer unit and an alkylene structural unit, and a feature thereof is that the production method includes a terminal modification step of modifying at least one terminal of a polymer including a nitrile group-containing monomer unit and either or both of a conjugated diene monomer unit and an alkylene structural unit using a compound derived from the previously described formula (1) or (2) and a purification step of purifying a composition obtained through the terminal modification step such that the concentration of divalent or higher-valent metal ions is not less than 5 mass ppm and not more than 4,000 mass ppm. Through the production method set forth above, it is possible to efficiently produce the presently disclosed composition for an electrochemical device set forth above. In addition, the presently disclosed production method can include a polymerization step of the nitrile polymer in advance of the terminal modification step.

### <Polymerization step of nitrile polymer>

No specific limitations are placed on the method by which the nitrile polymer is polymerized. For example, the nitrile polymer can be produced by polymerizing a monomer composition that contains a nitrile group-containing monomer, a conjugated diene monomer, and other optional monomers such as previously described in an aqueous solvent and optionally performing hydrogenation. In a case in which hydrogenation is performed, the hydrogenation may be performed during this polymerization step or may be performed after the terminal modification step. The hydrogenation can be performed according to a known method. Moreover, the proportional content of each monomer in the monomer composition can be set in accordance with the desired proportional contents of repeating units (monomer units and/or structural units) in the polymer.

The method of polymerization may be any of solution polymerization, suspension polymerization, bulk polymerization, emulsion polymerization, etc. without any specific limitations. Moreover, reactions such as ionic polymerization, radical polymerization, living radical polymerization, various types of condensation polymerization, addition polymerization, and so forth can be adopted as the polymerization reaction. Furthermore, known emulsifiers, chain transfer agents, and polymerization initiators can be used in the polymerization as necessary.

In a situation in which the polymer that has undergone polymerization in the polymerization step is to be collected from the reaction liquid, collection thereof can be performed through coagulation using a coagulant. Examples of coagulants that can be used include magnesium sulfate, calcium chloride, aluminum chloride, aluminum sulfate, potassium chloride, iron(II) sulfate, iron(III) sulfate, iron(II) chloride, and iron(III) chloride. Of these coagulants, magnesium sulfate, calcium chloride, and aluminum sulfate are preferable in terms that these coagulants can cause good coagulation of the polymer and can inhibit the formation of a residue or metal salt in the polymerization.

The weight-average molecular weight of the polymer obtained in the polymerization step is preferably 100,000 or more, more preferably 110,000 or more, and even more preferably 130,000 or more, and is preferably 450,000 or less, more preferably 350,000 or less, and even more preferably 300,000 or less. When the weight-average molecular weight of the polymer obtained in the polymerization step is within any of the ranges set forth above, good conductive material dispersibility can be displayed.

### <Terminal modification step>

In the terminal modification step, a compound represented by the previously described formula (1) or (2) is caused to act on the polymer obtained in the polymerization step to perform terminal modification treatment. Moreover, a metathesis reaction of the polymer can be performed during terminal modification of the polymer. In other words, it is possible to cause the comparatively high molecular weight nitrile polymer obtained in the polymerization step to be severed into pieces to obtain a low molecular weight nitrile polymer while also causing a compound represented by the previously described formula (1) or (2) to act on severed terminals to perform terminal modification treatment.

For example, in a situation in which a metathesis reaction and terminal modification of the polymer are to be performed concurrently, a compound represented by the previously described formula (1) or (2) that functions as a chain transfer agent for terminal modification and a metathesis reaction catalyst can be used together. A known ruthenium-based catalyst can be used as the catalyst for the metathesis reaction. In particular, Grubbs' catalysts such as bis(tricyclohexylphosphine)benzylidene ruthenium dichloride and 1,3-bis(2,4,6-trimethylphenyl)-2-(imidazolidinylidene)(dichlorophenylmethylene)(tricyclohexylphosphine)ruth enium are preferable as the catalyst for the metathesis reaction. Moreover, an olefin having a carbon number of 2 to 16 such as ethylene, isobutene, or 1-hexene can be used as a co-olefin.

In a situation in which a metathesis reaction and terminal modification are performed concurrently as described above, the amount of the compound represented by the previously described formula (1) or (2) that functions as a chain transfer agent for terminal modification can be set as not less than 1.0 parts by mass and not more than 70.0 parts by mass per 100 parts by mass of the polymer that is the subject of modification.

The weight-average molecular weight of the comparatively low molecular weight nitrile polymer that is obtained through the terminal modification step preferably satisfies any of the ranges that were previously described in the "(Composition for electrochemical device) <Polymer> [Weight-average molecular weight]" section.

### <Purification step>

In the purification step, a composition obtained through the terminal modification step described above is purified such that the concentration of divalent or higher-valent metal ions is not less than 5 mass ppm and not more than 4,000 mass ppm. The purification step can be performed by adding an adsorbent such as activated carbon, an ion exchange resin, or a synthetic zeolite to the composition obtained through the terminal modification step, performing mixing thereof, and subsequently performing filtration or decantation, for example, but is not specifically limited to being performed in this manner. The concentration of divalent or higher-valent metal ions in the composition after purification can be controlled according to the type of adsorbent, the additive amount of the adsorbent, the contact time with the adsorbent, and so forth. The concentration of divalent or higher-valent metal ions in the composition after purification preferably satisfies any of the ranges previously described in the "(Composition for electrochemical device) <Concentration of divalent or higher-valent metal ions in composition>" section.

The method of purification by filtration or decantation may, for example, be a method in which, after addition of an adsorbent as necessary, (i) filtration is performed using a bag filter, a cartridge filter, filter paper, a membrane filter, or the like, (ii) a cake layer of a filter aid (representative examples of which include diatomaceous earth and perlite) is formed and then a filtrate is passed using a filtering apparatus such as a leaf filter, a filter press, a candle filter, or a drum filter, or (iii) a metal salt formed by a residue and metal ions in polymerization is caused to sediment by centrifugal separation and is then removed through withdrawal of a bottom portion.

Note that the source of divalent or higher-valent metal ions that are contained in the composition before and after purification can be various additives in the polymerization step such as a compound used as a coagulant, various additives in the metathesis reaction/terminal modification reaction/hydrogenation reaction such as a compound used as a catalyst, and so forth.

### (Binder composition for electrochemical device)

A feature of the presently disclosed binder composition is that it contains the presently disclosed composition for an electrochemical device set forth above, N-methyl-2-pyrrolidone, and a halogenated hydrocarbon. Moreover, this binder composition can increase flexibility of an obtained electrode and inhibit cracking of an electrode active material in the electrode as a result of containing the presently disclosed composition for an electrochemical device.

### <Halogenated hydrocarbon>

The halogenated hydrocarbon may be any halogenated hydrocarbon in which at least one carbon atom of a hydrocarbon has been substituted with a halogen atom without any specific limitations and may be a chlorinated hydrocarbon, a fluorinated hydrocarbon, a brominated hydrocarbon, or the like. One of these halogenated hydrocarbons may be used individually, or two or more of these halogenated hydrocarbons may be used in combination in a freely selected ratio. Of these halogenated hydrocarbons, chlorinated hydrocarbons are preferable from a viewpoint of further improving viscosity stability of the binder composition and peel strength of an electrode. Note that the halogenated hydrocarbon may, for example, be a halogenated hydrocarbon that was used as a reaction solvent or the like in a production step of the composition for an electrochemical device and may remain in the binder composition for an electrochemical device as a residue of the used halogenated hydrocarbon.

Examples of chlorinated hydrocarbons include chloroalkanes and chlorobenzenes.

Specific examples of chloroalkanes include 1-chloropropane, 2-chloropropane, 1-chlorobutane, 2-chlorobutane, 2-methyl-2-chloropropane, 2-methyl-1-chloropropane, 1-chloropentane, 2-chloropentane, 3-chloropentane, 2-chloro-2-methylbutane, 1-chloro-2-ethylbutane, 1-chlorohexane, 2-chlorohexane, 3-chlorohexane, 2-chloro-methyl-pentane, 1-chloroheptane, 2-chloroheptane, 3-chloroheptane, 1-chlorooctane, 2-chlorooctane, 3-chlorooctane, 1-chloro-1,1,3,3-tetramethylbutane, 1-chloro-2,2,4,4-tetramethylbutane, 1-chloro-3-methylheptane, 1-chloro-2-ethylhexane, 1-chlorononane, 2-chlorononane, 3-chlorononane, 1-chloro-1,1,3-trimethylhexane, 1-chloro-1,1,3,3-tetramethylpentane, 1-chlorodecane, 2-chlorodecane, 3-chlorodecane, 1-chloro-1,1,3,3,5,5-hexamethylhexane, 1-chloro-8-methylnonane, 1-chloroundecane, 2-chloroundecane, 3-chloroundecane, 1-chlorododecane, 2-chlorododecane, 3-chlorododecane, 1-chlorotridecane, 2-chlorotridecane, 3-chlorotridecane, 1-chlorotetradecane, 2-chlorotetradecane, 3-chlorotetradecane, 1-chloropentadecane, 2-chloropentadecane, 3-chloropentadecane, 1-chlorohexadecane, 2-chlorohexadecane, 3-chlorohexadecane, 1-chloroheptadecane, 2-chloroheptadecane, 3-chloroheptadecane, 1-chlorooctadecane, 2-chlorooctadecane, and 3-chlorooctadecane.

Specific examples of chlorobenzenes include monochlorobenzene, 1,2-dichlorobenzene, 1,3-dichlorobenzene, 1,4-dichlorobenzene, 1,2,3-trichlorobenzene, 1,2,4-trichlorobenzene, 1,3,5-trichlorobenzene, 1,2,3,4-tetrachlorobenzene, 1,2,4,5-tetrachlorobenzene, pentachlorobenzene, and hexachlorobenzene.

Of these chlorinated hydrocarbons, 1-chloropropane and monochlorobenzene are preferable from a viewpoint of further improving viscosity stability of the binder composition and peel strength of an electrode. Note that one chlorinated hydrocarbon may be used individually, or two or more chlorinated hydrocarbons may be used in combination in a freely selected ratio.

As previously described, the content of the halogenated hydrocarbon in the presently disclosed binder composition is preferably 2 mass ppm or more, more preferably 10 mass ppm or more, and even more preferably 30 mass ppm or more relative to the content of the nitrile polymer, and is preferably 400 mass ppm or less, more preferably 350 mass ppm or less, and even more preferably 300 mass ppm or less relative to the content of the nitrile polymer. When the content of the halogenated hydrocarbon is not less than any of the lower limits set forth above relative to the content of the nitrile polymer, peel strength of an obtained electrode can be increased. On the other hand, when the content of the halogenated hydrocarbon is not more than any of the upper limits set forth above relative to the content of the nitrile polymer, dispersion stability of a conductive material dispersion liquid can be increased. Note that the content of the halogenated hydrocarbon can be measured by gas chromatography.

### <Other components>

Examples of other components besides the nitrile polymer, halogenated hydrocarbon, and NMP that can be contained in the presently disclosed binder composition include, but are not specifically limited to, binders other than the nitrile polymer (polyvinylidene fluoride, polyacrylate, etc.), reinforcing materials, leveling agents, viscosity modifiers, and additives for electrolyte solution. These other components are not specifically limited so long as they do not affect battery reactions and can be selected from commonly known components. The presently disclosed binder composition may also contain a solvent other than NMP.

Note that one of these other components may be used individually, or two or more of these other components may be used in combination in a freely selected ratio.

### (Conductive material dispersion liquid)

The presently disclosed conductive material dispersion liquid is a composition that contains a conductive material and the presently disclosed composition for an electrochemical device or the presently disclosed binder composition set forth above. In other words, the presently disclosed conductive material dispersion liquid contains a conductive material and the previously described nitrile polymer and optionally contains the previously described halogenated hydrocarbon, NMP, and other components. Moreover, the presently disclosed conductive material dispersion liquid can increase flexibility of an obtained electrode and inhibit cracking of an electrode active material in the electrode as a result of containing the presently disclosed composition for an electrochemical device or binder composition.

Note that the presently disclosed conductive material dispersion liquid is an intermediate product for producing the presently disclosed slurry for an electrode described further below and does not normally contain an electrode active material. Also note that the nitrile polymer and the halogenated hydrocarbon that are contained in the presently disclosed conductive material dispersion liquid originate from the presently disclosed binder composition, and the preferred ratio thereof is the same as in the presently disclosed binder composition.

### <Conductive material>

The conductive material is a component that functions to ensure electrical contact among an electrode active material. A carbonaceous material can suitably be used as the conductive material. Examples of carbonaceous materials that may be used include carbon black (for example, acetylene black, Ketjenblack^{®} (Ketjenblack is a registered trademark in Japan, other countries, or both), and furnace black), single-walled or multi-walled carbon nanotubes (multi-walled carbon nanotubes are inclusive of cup-stacked carbon nanotubes), carbon nanohorns, vapor-grown carbon fiber, milled carbon fiber obtained by pyrolyzing and then pulverizing polymer fiber, single-layer or multi-layer graphene, and carbon non-woven fabric sheet obtained by pyrolyzing non-woven fabric made of polymer fiber. Note that one of these carbonaceous materials may be used individually, or two or more of these carbonaceous materials may be used in combination in a freely selected ratio. Of these carbonaceous materials, carbon nanotubes are preferable from a viewpoint of good formation of electrical conduction paths.

### <<Carbon nanotubes>>

Although no specific limitations are made, it is preferable that the CNTs have the following property.

### [BET specific surface area]

The BET specific surface area of the CNTs is preferably 100 m²/g or more, more preferably 150 m²/g or more, and even more preferably 200 m²/g or more, and is preferably 300 m²/g or less. Dispersion stability of the conductive material dispersion liquid can be increased when the BET specific surface area is 100 m²/g or more, whereas output characteristics of an obtained electrochemical device can be enhanced when the BET specific surface area is 300 m²/g or less.

Note that the "BET specific surface area" of CNTs referred to in the present disclosure can be measured by a method described in the EXAMPLES section.

### <Composition for electrochemical device>

The composition for an electrochemical device is the presently disclosed composition for an electrochemical device that contains the previously described nitrile polymer, that optionally contains other components such as previously described, and that has a concentration of divalent or higher-valent metal ions of not less than 5 mass ppm and not more than 4,000 mass ppm.

### <Binder composition>

The binder composition is the presently disclosed binder composition that contains the previously described nitrile polymer, the previously described halogenated hydrocarbon, and NMP and that optionally contains other components such as previously described.

No specific limitations are placed on the quantitative ratio of the conductive material and the binder composition when the conductive material and the binder composition are mixed to obtain the conductive material dispersion liquid. For example, the conductive material and the binder composition may be mixed in a quantitative ratio such that the obtained conductive material dispersion liquid preferably contains 1 part by mass or more, more preferably 5 parts by mass or more, and even more preferably 10 parts by mass or more of the nitrile polymer per 100 parts by mass of the conductive material, and preferably contains 100 parts by mass or less, more preferably 40 parts by mass or less, and even more preferably 30 parts by mass or less of the nitrile polymer per 100 parts by mass of the conductive material.

The solid content concentration of the conductive material dispersion liquid is preferably 0.01 mass% or more, more preferably 1.0 mass% or more, and even more preferably 3.0 mass% or more, and is preferably 10.0 mass% or less, more preferably 9.0 mass% or less, and even more preferably 8.0 mass% or less. When the solid content concentration is not less than any of the lower limits set forth above, coatability of the conductive material dispersion liquid can be increased. Moreover, when the solid content concentration is not more than any of the upper limits set forth above, rate characteristics of an obtained electrochemical device can be enhanced.

### <Production method of conductive material dispersion liquid>

No specific limitations are placed on the method by which the conductive material dispersion liquid is produced. The conductive material dispersion liquid can be produced by mixing the conductive material and the binder composition using a known mixing device, for example.

### (Slurry for electrochemical device electrode)

The presently disclosed slurry for an electrode is a composition that contains an electrode active material and the conductive material dispersion liquid set forth above. In other words, the presently disclosed slurry for an electrode contains an electrode active material, the previously described conductive material, the previously described nitrile polymer, the previously described halogenated hydrocarbon, and NMP and optionally contains other components such as previously described. Moreover, as a result of the presently disclosed slurry for an electrode containing the presently disclosed conductive material dispersion liquid, flexibility of an obtained electrode can be increased and cracking of an electrode active material in the electrode can be inhibited by using the slurry for an electrode.

Note that the conductive material, the nitrile polymer, and the halogenated hydrocarbon that are contained in the presently disclosed slurry for an electrode originate from the presently disclosed composition for an electrochemical device or binder composition and the conductive material dispersion liquid, and the preferred ratio thereof is the same as in the presently disclosed binder composition and conductive material dispersion liquid.

### <Electrode active material>

Known electrode active materials can be used as the electrode active material (positive electrode active material or negative electrode active material) contained in the slurry for an electrode without any specific limitations.

A positive electrode active material that is used in a lithium ion secondary battery, for example, may be a metal oxide containing lithium (Li), but is not specifically limited thereto. Moreover, the positive electrode active material is preferably a positive electrode active material that contains one or more selected from the group consisting of cobalt (Co), nickel (Ni), manganese (Mn), and iron (Fe) in addition to lithium (Li). Examples of such positive electrode active materials include lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium manganese phosphate (LiMnPO₄), olivine-type lithium iron phosphate (LiFePO₄), a lithium-rich spinel compound represented by Li₁ₓMn₂₋ₓO₄ (0 < x < 2), Li[Ni_{0.17}Li_{0.2}Co_{0.07}Mn_{0.56}]O₂, LiNi_{0.5}Mn_{1.5}O₄, and Li[Ni_{0.5}Co_{0.2}Mn_{0.3}]O₂. Note that one positive electrode active material may be used individually, or two or more positive electrode active materials may be used in combination in a freely selected ratio.

Also note that the particle diameter of the electrode active material is not specifically limited and may be the same as that of a conventionally used electrode active material.

The amount of the electrode active material in the slurry for an electrode is also not specifically limited and can be set within a range that is conventionally adopted.

### <Conductive material dispersion liquid>

The conductive material dispersion liquid is the presently disclosed conductive material dispersion liquid that contains the previously described conductive material, the previously described nitrile polymer, the previously described halogenated hydrocarbon, and NMP and that optionally contains other components such as previously described.

### <Production method of slurry for electrode>

No specific limitations are placed on the method by which the slurry for an electrode is produced. The slurry for an electrode can be produced by mixing the electrode active material and the conductive material dispersion liquid using a known mixing device, for example.

### (Electrode for electrochemical device)

The presently disclosed electrode includes an electrode mixed material layer obtained using the presently disclosed slurry for an electrode set forth above on a current collector. More specifically, the presently disclosed electrode normally includes the aforementioned electrode mixed material layer on a current collector. Moreover, the presently disclosed electrode has excellent flexibility and little occurrence of electrode active material cracking as a result of the electrode mixed material layer being formed from the presently disclosed slurry for an electrode set forth above.

### <Current collector>

The current collector is formed of a material having electrical conductivity and electrochemical durability. Any known current collector can be used without any specific limitations as the current collector. For example, a current collector that is formed of aluminum or an aluminum alloy can be used as a current collector that is included in a positive electrode of a lithium ion secondary battery. Moreover, aluminum and an aluminum alloy may be used in combination, or different types of aluminum alloys may be used in combination. Aluminum and aluminum alloys are excellent current collector materials due to having heat resistance and electrochemical stability.

### <Production method of electrode>

No specific limitations are placed on the method by which the presently disclosed electrode is produced. For example, the presently disclosed electrode can be produced by applying the presently disclosed slurry for an electrode set forth above onto at least one side of the current collector and drying the slurry for an electrode to form an electrode mixed material layer. In more detail, this production method includes a step of applying the slurry for an electrode onto at least one side of the current collector (application step) and a step of drying the slurry for an electrode that has been applied onto at least one side of the current collector to form an electrode mixed material layer on the current collector (drying step).

### «Application step»

The slurry for an electrode may be applied onto the current collector by any commonly known method without any specific limitations. Specific examples of application methods that can be used include doctor blading, dip coating, reverse roll coating, direct roll coating, gravure coating, extrusion coating, and brush coating. In the application, the slurry for an electrode may be applied onto just one side of the current collector or may be applied onto both sides of the current collector. The thickness of the slurry coating on the current collector after application but before drying may be set as appropriate in accordance with the thickness of the electrode mixed material layer to be obtained after drying.

### <<Drying step>>

The slurry for an electrode on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry for an electrode on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as mold pressing or roll pressing. This pressing process enables good close adherence of the electrode mixed material layer to the current collector.

Moreover, in a case in which the electrode mixed material layer contains a curable polymer, this polymer may be cured after formation of the electrode mixed material layer.

### (Electrochemical device)

The presently disclosed electrochemical device includes the presently disclosed electrode set forth above. Moreover, the presently disclosed electrochemical device has excellent device characteristics such as rate characteristics as a result of including the presently disclosed electrode. The presently disclosed electrochemical device may be a non-aqueous secondary battery, for example, and is preferably a lithium ion secondary battery.

The following describes the configuration of a lithium ion secondary battery as one example of the presently disclosed electrochemical device. This lithium ion secondary battery includes a positive electrode, a negative electrode, an electrolyte solution, and a separator. At least one of the positive electrode and the negative electrode is the presently disclosed electrode. In other words, this lithium ion secondary battery may be a lithium ion secondary battery in which the positive electrode is the presently disclosed electrode and the negative electrode is an electrode other than the presently disclosed electrode, may be a lithium ion secondary battery in which the positive electrode is an electrode other than the presently disclosed electrode and the negative electrode is the presently disclosed electrode, or may be a lithium ion secondary battery in which the positive electrode and the negative electrode are both the presently disclosed electrode. In particular, it is preferable that the positive electrode is the presently disclosed electrode.

### <Electrode other than presently disclosed electrode>

Any known electrode can be used without any specific limitations as an electrode that does not correspond to the presently disclosed electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and diethyl carbonate is more preferable.

The concentration of the electrolyte in the electrolyte solution can be adjusted as appropriate and can preferably be set as 0.5 mass% to 15 mass%, more preferably be set as 2 mass% to 13 mass%, and even more preferably be set as 5 mass% to 10 mass%, for example. Moreover, known additives such as vinylene carbonate, fluoroethylene carbonate, and ethyl methyl sulfone may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

### <Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%", "ppm", and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the case of a polymer that is a hydrogenated polymer obtained through hydrogenation of a polymerized product including conjugated diene monomer units, the total proportional content of non-hydrogenated conjugated diene monomer units and alkylene structural units that are hydrogenated conjugated diene monomer units in the hydrogenated polymer is the same as the ratio (charging ratio) of a conjugated diene monomer among all monomers used in polymerization of the polymerized product.

In the examples and comparative examples, various measurements and evaluations were performed by the following methods.

### <Iodine value>

The iodine value of a nitrile polymer was measured in accordance with JIS K 6235.

### <Weight-average molecular weight>

The weight-average molecular weight (Mw) of a nitrile polymer was measured by gel permeation chromatography (GPC) under the following measurement conditions using LiBr-dimethylformamide (DMF) solution of 10 mM in concentration.
- Separation column: Shodex KD-806M (produced by Showa Denko K.K.)
- Detector: Differential refractive index detector RID-10A (produced by Shimadzu Corporation)
- Flow rate of eluent: 0.3 mL/min
- Column temperature: 40°C
- Standard polymer: TSK standard polystyrene (produced by Tosoh Corporation)

### <Metal ion concentration>

Approximately 1 g in terms of solid content of a composition for an electrochemical device was sampled, was dissolved in approximately 5 mL of concentrated sulfuric acid, and was subjected to carbonization treatment on a heater. Thereafter, approximately 3 hours of incineration was performed in a 1000°C electric furnace. The sample was left to cool, and then approximately 2 mL of concentrated nitric acid was gradually added to cause wet decomposition. After decomposition, the acid was concentrated, the volume was made up to 10 mL with ultrapure water, and the concentration of divalent or higher-valent metal ions was measured using an ICP-AES (model number: SPS-5100; produced by SII NanoTechnology Inc.). The concentration of divalent or higher-valent metal ions contained in the composition was calculated from the measured value. The metal ions taken as measurement subjects in this measurement were calcium ions, rhodium ions, ruthenium ions, and palladium ions.

### <BET specific surface area>

The BET specific surface area of CNTs was measured using a Belsorp-mini (produced by MicrotracBEL Corp.; conforming with ASTM D3037-81).

### <Content of halogenated hydrocarbon>

The content of a halogenated hydrocarbon (i.e., chlorobenzene in Examples 1 to 11 and Comparative Examples 1 to 3) based on composition solid content mass (i.e., equivalent to nitrile polymer mass) was measured by gas chromatography. First, composition solid content was dissolved in acetone such as to have a concentration of 1 mass% and was measured by gas chromatography. The measurement result was used to calculate the content of the halogenated hydrocarbon based on the composition solid content mass (i.e., equivalent to nitrile polymer mass) from a calibration curve for the halogenated hydrocarbon that was separately calculated.

The used apparatus and measurement conditions were as follows.
- Apparatus: 8860 GC System (produced by Agilent Technologies, Inc.)
- Separation column: HP-1 (length 30 m, internal diameter 0.25 mm, film thickness 0.25 µm) (produced by Agilent Technologies, Inc.)
- Detector: FID
- Oven settings: Oven 40°C, Inj 300°C, Det 315°C
- Carrier gas: N₂ 60 kPa
- Injection volume: 1 µL
- Analysis conditions:
   1. Holding at 40°C for 5 minutes
   2. Heating from 40°C to 120°C at 5°C/min
   3. Heating from 120°C to 280°C at 10°C/min
   4. Holding at 280°C for 5 minutes

### <Viscosity of conductive material dispersion liquid>

The viscosity of a conductive material dispersion liquid obtained in each example or comparative example was measured for 120 seconds at a temperature of 25°C and a shear rate of 10 (1/s) using a rheometer (MCR 302 produced by Anton Paar). An average value of viscosity measurement values from 61 seconds to 120 seconds was evaluated in accordance with the following standard.
A: 1 Pa·s or less
B: More than 1 Pa·s and not more than 5 Pa·s
C: More than 5 Pa·s and not more than 10 Pa·s
D: More than 10 Pa·s

### <Peel strength>

A positive electrode produced in each example or comparative example was cut out as a rectangle of 100 mm in length and 10 mm in width to obtain a test specimen. The test specimen was placed with a surface at which the positive electrode mixed material layer was present facing downward, cellophane tape (tape in accordance with JIS Z 1522) was affixed to the surface of the positive electrode mixed material layer, and then the stress when one end of the current collector was pulled in a perpendicular direction at a pulling speed of 100 mm/min to peel off the current collector was measured. (Note that the cellophane tape was fixed to a test stage.) Three measurements were performed in this manner. An average value of the measurements was determined, was taken to be the peel strength, and was evaluated by the following standard. A larger value for the peel strength indicates stronger close adherence of the positive electrode mixed material layer to the current collector formed of aluminum foil.
A: Peel strength of 15 N/m or more
B: Peel strength of not less than 10 N/m and less than 15 N/m
C: Peel strength of not less than 5 N/m and less than 10 N/m
D: Peel strength of less than 5 N/m

### <Electrode flexibility>

A positive electrode produced in each example or comparative example was wound around a rod made of SUS (Stainless Steel) with the positive electrode mixed material layer at an outer side, and the occurrence or absence of cracking was checked. Electrode flexibility was evaluated by the following standard according to the largest rod diameter with which cracking occurred. When the largest rod diameter with which cracking occurs is smaller, electrode flexibility is better.
A: No cracking even upon winding around rod of 1.50 mm in diameter
B: No cracking even upon winding around rod of 1.80 mm in diameter
C: No cracking even upon winding around rod of 2.10 mm in diameter
D: No cracking even upon winding around rod of 3.00 mm in diameter

### <Cycle characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was CC-CV charged by a 0.2C constant-current method (upper limit cell voltage 4.20 V) and was then CC discharged to 3.00 V by a 0.2C constant-current method. This charging and discharging at 0.2C was repeated three times.

Next, the lithium ion secondary battery was subjected to 300 cycles of a charge/discharge operation with a cell voltage of 4.20 V to 3.00 V and a charge/discharge rate of 1.0C in an environment having a temperature of 45°C. The discharge capacity of the 1^{st} cycle was defined as X1, and the discharge capacity of the 300^{th} cycle was defined as X2. The discharge capacity X1 and the discharge capacity X2 were used to calculate a capacity maintenance rate (= (X2/X1) × 100(%)), which was then evaluated by the following standard. A larger value for the capacity maintenance rate indicates that the lithium ion secondary battery has better cycle characteristics.
A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

### <Presence of active material cracking after cycling>

A lithium ion secondary battery produced in each example or comparative example was dismantled after being subjected to a cycling test so as to remove the positive electrode. A cross-sectional SEM image of the positive electrode was observed at × 1,000, and an evaluation was made as follows according to the number of observed active material cracks.
A: Number of active material cracks is less than 2
B: Number of active material cracks is not less than 2 and less than 5
C: Number of active material cracks is not less than 5 and less than 9
D: Number of active material cracks is 9 or more

### (Example 1)

### <Production of composition for electrochemical device>

### -Polymerization step-

A reactor having an internal capacity of 10 L was charged with 100 parts of deionized water, 33 parts of acrylonitrile as an α,β-ethylenically unsaturated nitrile monomer, and 67 parts of 1,3-butadiene as a conjugated diene monomer. Next, 2 parts of potassium oleate as an emulsifier, 0.1 parts of potassium phosphate as a stabilizer, and 0.3 parts of tert-dodecyl mercaptan (TDM) as a molecular weight modifier were added thereto, and emulsion polymerization was performed at a temperature of 5°C in the presence of 0.35 parts of potassium persulfate as a polymerization initiator so as to copolymerize acrylonitrile and 1,3-butadiene.

At the point at which the polymerization conversion rate reached 89%, 0.2 parts of hydroxylamine sulfate was added per 100 parts of monomers to end the polymerization. Next, heating was performed, and then steam distillation was performed under reduced pressure at approximately 90°C to recover residual monomer. Thereafter, 0.1 parts of dibutylhydroxytoluene (BHT) was added as a substituted phenol to yield a water dispersion of a copolymer of acrylonitrile and 1,3-butadiene that was a precursor for a nitrile polymer A1.

A 25 mass% aqueous solution of calcium chloride (CaCh) was added under stirring as a coagulant in an amount such as to be 3 parts relative to 100 parts of polymer solid content in the obtained water dispersion, and the polymer in the water dispersion was caused to coagulate. Thereafter, the polymer was filtered off and was water washed by passing deionized water in an amount 50 times that of the obtained polymer. The polymer was subsequently dried under reduced pressure at a temperature of 90°C to yield a precursor 1.

### -Terminal modification step (inclusive of metathesis reaction)-

Next, 9 parts of the obtained precursor 1 was dissolved in 141 parts of monochlorobenzene, which is a halogenated hydrocarbon, and was loaded into a reactor. The reactor was heated to 80°C, and then 2 L of a monochlorobenzene solution containing bis(tricyclohexylphosphine)benzylidene ruthenium dichloride as a Grubbs' catalyst was added such that the amount of the Grubbs' catalyst was 1,000 ppm relative to the precursor 1. In addition, 4.4 parts of cis-2-butene-1,4-diol (compound represented by formula (2)) was added as a chain transfer agent for terminal modification relative to 100 parts of the precursor 1, and a metathesis/modification reaction of the precursor 1 was performed at a stirring speed of 600 rpm to produce a polymer B1. During the reaction, the temperature was kept constant using a cooling coil connected to a temperature controller and a heat sensor.

### -Hydrogenation of polymer B1-

Next, the inside of the reactor was degassed three times with 0.7 MPa Hz while continuing stirring. The temperature of the reactor was then raised to 130°C, and 1 L of a monochlorobenzene solution containing Wilkinson's catalyst and triphenylphosphine was added into the reactor. Note that the amount of the Wilkinson's catalyst was set as 0.03 parts and the amount of triphenylphosphine was set as 1 part relative to 100 parts of the polymer B1. Next, the temperature was raised to 138°C, and a polymer hydrogenation reaction was performed under a condition of a hydrogen pressure (gauge pressure) of 8.4 MPa.

### -Purification step-

After the hydrogenation reaction had ended, the reactor was charged with 0.2 parts of activated carbon having an average diameter of 15 µm and was stirred for 30 minutes in order to adjust the concentration of divalent or higher-valent metal ions and remove residual chain transfer agent. Thereafter, filtration was performed using a filter having a pore diameter of 5 µm. The filtered solution was dried under heating so as to remove monochlorobenzene up until a specific amount and yield a composition for an electrochemical device containing a nitrile polymer A1. The obtained composition for an electrochemical device was used to measure the iodine value and weight- average molecular weight. The results are shown in Table 1.

### <Production of binder composition for electrochemical device>

NMP was added to the above-described composition for an electrochemical device A1 to produce 1 kg of a binder composition having a solid content concentration of 8%. The produced binder solution was used to measure the content of halogenated hydrocarbon based on composition solid content mass (i.e., equivalent to nitrile polymer mass) by gas chromatography as previously described. The result is shown in Table 1.

### <Production of conductive material dispersion liquid>

A conductive material dispersion liquid was produced by adding together 5 parts of multi-walled carbon nanotubes (BET specific surface area: 250 m²/g) as a conductive material, 12.5 parts (equivalent to 1 part as solid content) of the binder composition for an electrochemical device of 8% in solid content concentration obtained as described above, and 82.5 parts of NMP as an organic solvent, using a disper blade to perform stirring (3,000 rpm, 10 minutes), and subsequently using a bead mill (LMZ015 produced by Ashizawa Finetech Ltd.) in which zirconia beads of 1 mm in diameter were used to perform 1 hour of mixing at a circumferential speed of 8 m/s.

### <Production of slurry for secondary battery positive electrode>

In the conductive material dispersion liquid described above, 98.0 parts of a ternary active material having a layered structure (LiNi_{0.5}Co_{0.2}Mn_{0.3}O₂; average particle diameter: 10 µm) as a positive electrode active material, 1.0 parts of polyvinylidene fluoride as a binder, 1.0 parts (in terms of solid content) of the conductive material dispersion liquid, and NMP were added together and were mixed (60 rpm, 30 minutes) in a planetary mixer to produce a slurry for a positive electrode. Note that the additive amount of NMP was adjusted such that the viscosity of the obtained slurry composition for a positive electrode (measured by single-cylinder rotational viscometer in accordance with JIS Z8803: 1991; temperature: 25°C; rotation speed: 60 rpm) was within a range of 4,000 mPa·s to 5,000 mPa·s.

### <Production of positive electrode>

Aluminum foil of 20 µm in thickness was prepared as a current collector. The slurry for a positive electrode was applied onto the aluminum foil by a comma coater such as to have a coating weight after drying of 20 mg/cm², was dried at 120°C for 5 minutes and at 130°C for 5 minutes, and was then heat treated at 60°C for 10 hours to obtain a positive electrode web. This positive electrode web was rolled by roll pressing to produce a sheet-shaped positive electrode including the aluminum foil and a positive electrode mixed material layer of 3.5 g/cm³ in density. The sheet-shaped positive electrode was cut to 4.8 cm in width and 50 cm in length to obtain a positive electrode for a lithium ion secondary battery.

Peel strength and electrode flexibility were evaluated for the obtained positive electrode for a lithium ion secondary battery. The results are shown in Table 1.

### <Production of negative electrode for lithium ion secondary battery>

A 5 MPa pressure-resistant vessel equipped with a stirrer was charged with 33 parts of 1,3-butadiene as an aliphatic conjugated diene monomer, 3.5 parts of itaconic acid as a carboxyl group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing a binder for a negative electrode.

Next, a planetary mixer was charged with 48.75 parts of artificial graphite and 48.75 parts of natural graphite as negative electrode active materials and 1 part of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode that was obtained as described above was added and kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry for a negative electrode mixed material layer.

Next, copper foil of 15 µm in thickness was prepared as a current collector. The slurry for a negative electrode was applied onto both sides of the copper foil such as to have a coating weight after drying of 10 mg/cm² at each side, and was dried at 80°C for 5 minutes and at 120°C for 5 minutes to obtain a negative electrode web. This negative electrode web was rolled by roll pressing to produce a sheet-shaped negative electrode including the copper foil and negative electrode mixed material layers (both sides) of 1.6 g/cm³ in density. The sheet-shaped negative electrode was cut to 5.0 cm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up with the respective electrode mixed material layers thereof facing each other and with a separator (microporous membrane made of polyethylene) of 15 µm in thickness interposed therebetween using a core of 20 mm in diameter so as to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was prepared as an electrolyte solution.

Thereafter, the compressed roll was housed inside a laminate case made of aluminum together with 3.2 g of the non-aqueous electrolyte solution. After connecting a nickel lead at a specific location on the negative electrode and connecting an aluminum lead at a specific location on the positive electrode, an opening of the case was heat sealed to obtain a lithium ion secondary battery. This lithium ion secondary battery had a pouch shape of a specific size capable of housing the roll. The nominal capacity of the battery was 700 mAh.

Cycle characteristics and electrode active material cracking after cycling were evaluated for the obtained lithium ion secondary battery. The results are shown in Table 1.

### (Example 2)

Various operations, measurements, and evaluations were performed in the same way as in Example 1 with the exception that the chain transfer agent for terminal modification used in the terminal modification step of "<Production of composition for electrochemical device A1>" was changed to maleic acid, which is a compound represented by formula (2), and the amount thereof was changed to 5.8 parts. The results are shown in Table 1.

### (Example 3)

Various operations, measurements, and evaluations were performed in the same way as in Example 1 with the exception that the chain transfer agent for terminal modification used in the terminal modification step of "<Production of composition for electrochemical device A1>" was changed to 3-buten-1-amine, which is a compound represented by formula (1), and the amount thereof was changed to 3.6 parts. The results are shown in Table 1.

### (Example 4)

Various operations, measurements, and evaluations were performed in the same way as in Example 1 with the exception that the chain transfer agent for terminal modification used in the terminal modification step of "<Production of composition for electrochemical device A1>" was changed to vinyltrimethoxysilane, which is a compound represented by formula (1), and the amount thereof was changed to 7.4 parts. The results are shown in Table 1.

### (Example 5)

Various operations, measurements, and evaluations were performed in the same way as in Example 1 with the exception that the chain transfer agent for terminal modification used in the terminal modification step of "<Production of composition for electrochemical device A1>" was changed to methoxy polyalkylene glycol methacrylate (n = 23), which is a compound represented by formula (1), and the amount thereof was changed to 55.6 parts. The results are shown in Table 1.

### (Example 6)

Various operations, measurements, and evaluations were performed in the same way as in Example 1 with the exception that the chain transfer agent for terminal modification used in the terminal modification step of "<Production of composition for electrochemical device A1>" was changed to 2-methacryloyloxyethyl acid phosphate, which is a compound represented by formula (1), and the amount thereof was changed to 10.5 parts. The results are shown in Table 1.

### (Example 7)

Various operations, measurements, and evaluations were performed in the same way as in Example 1 with the exception that the chain transfer agent for terminal modification used in the terminal modification step of "<Production of composition for electrochemical device A1>" was changed to 2-(methacryloyloxy)ethanesulfonic acid, which is a compound represented by formula (1), and the amount thereof was changed to 9.7 parts. The results are shown in Table 1.

### (Example 8)

Various operations, measurements, and evaluations were performed in the same way as in Example 1 with the exception that the amount of activated carbon added in "<Purification step>" was changed to 0.5 parts. The results are shown in Table 2.

### (Example 9)

Various operations, measurements, and evaluations were performed in the same way as in Example 1 with the exception that the amount of activated carbon added in "<Purification step>" was changed to 0.02 parts. The results are shown in Table 2.

### (Example 10)

Various operations, measurements, and evaluations were performed in the same way as in Example 1 with the exception that the amount of the Grubbs' catalyst used in the terminal modification step of "<Production of composition for electrochemical device A1>" was changed to 500 ppm. The results are shown in Table 2.

### (Example 11)

Various operations, measurements, and evaluations were performed in the same way as in Example 1 with the exception that the amount of the Grubbs' catalyst used in the terminal modification step of "<Production of composition for electrochemical device A1>" was changed to 3,000 ppm. The results are shown in Table 2.

### (Comparative Example 1)

Various operations, measurements, and evaluations were performed in the same way as in Example 1 with the exception that the chain transfer agent for terminal modification used in the terminal modification step of "<Production of composition for electrochemical device A1>" was changed to 1-hexene, which is a compound that does not correspond to either of formulae (1) and (2), and the amount thereof was changed to 4.2 parts. The results are shown in Table 2.

### (Comparative Example 2)

Various operations, measurements, and evaluations were performed in the same way as in Example 1 with the exception that the amount of activated carbon added in "<Purification step>" was changed to 2 parts. The results are shown in Table 2.

### (Comparative Example 3)

Various operations, measurements, and evaluations were performed in the same way as in Example 1 with the exception that the amount of activated carbon added in "<Purification step>" was changed to 0.05 parts. The results are shown in Table 2.

### (Comparative Example 4)

Various operations, measurements, and evaluations were performed in the same way as in Example 1 with the exception that a composition produced as described below was used as a composition for an electrochemical device. The results are shown in Table 2.

### <Production of composition for electrochemical device>

A reactor having an internal capacity of 10 L was charged with 100 parts of deionized water, 23 parts of acrylonitrile as an α,β-ethylenically unsaturated nitrile monomer, 57 parts of 1,3-butadiene as a conjugated diene monomer, and 20 parts of hydroxyethyl methacrylate. Next, 2 parts of potassium oleate as an emulsifier, 0.1 parts of potassium phosphate as a stabilizer, and 1.5 parts of tert-dodecyl mercaptan (TDM) as a molecular weight modifier were added thereto, and emulsion polymerization was performed at a temperature of 5°C in the presence of 0.35 parts of potassium persulfate as a polymerization initiator so as to copolymerize acrylonitrile, 1,3-butadiene, and hydroxyethyl methacrylate.

At the point at which the polymerization conversion rate reached 89%, 0.2 parts of hydroxylamine sulfate was added per 100 parts of monomers to end the polymerization. Next, heating was performed, and then steam distillation was performed under reduced pressure at approximately 90°C to recover residual monomer. Thereafter, 0.1 parts of dibutylhydroxytoluene (BHT) was added as a substituted phenol to yield a water dispersion of a copolymer of acrylonitrile, 1,3-butadiene, and hydroxyethyl methacrylate as a precursor 2.

A 25 mass% aqueous solution of calcium chloride (CaCh) was added under stirring as a coagulant in an amount such as to be 3 parts relative to 100 parts of polymer solid content in the obtained water dispersion, and the polymer in the water dispersion was caused to coagulate. Thereafter, the polymer was filtered off and was water washed by passing deionized water in an amount 50 times that of the obtained polymer. The polymer was subsequently dried under reduced pressure at a temperature of 90°C to yield the precursor 2.

### -Hydrogenation of precursor 2-

Next, the precursor 2 was hydrogenated by adopting oil-layer hydrogenation as the hydrogenation method. The precursor 2 was dissolved in acetone such as to have a concentration of 12% and thereby obtain an acetone solution of the precursor 2 as a hydrogenation subject. This acetone solution was loaded into an autoclave, 500 ppm of palladium/silica (Pd/SiO₂) was added as a catalyst relative to 100% of the precursor 2 serving as a hydrogenation subject, and then a hydrogenation reaction was performed at a hydrogen pressure of 3.0 MPa and a temperature of 90°C for 6 hours to yield a hydrogenation reaction product. After the hydrogenation reaction had ended, the palladium/silica was filtered off, and acetone (solvent) was removed under reduced pressure to obtain a composition for an electrochemical device.

### (Comparative Example 5)

In production of a composition for an electrochemical device in the same way as in Comparative Example 4, the amount of acrylonitrile was changed to 31 parts, the amount of 1,3-butadiene was changed to 65 parts, and the amount of hydroxyethyl methacrylate was changed to 4 parts.

With the exception that the composition for an electrochemical device produced in the manner was used, various operations, measurements, and evaluations were performed in the same way as in Example 1. The results are shown in Table 2.

**[Table 1]**

| | | | | | | Example 1 | Example 2 | Example 3 | Example 4 | Example 5 | Example 6 | Example 7 |
|---|---|---|---|---|---|---|---|---|---|---|---|---|
| | | | | Type | | HNBR | HNBR | HNBR | HNBR | HNBR | HNBR | HNBR |
| | | | | Weight-average molecular weight before terminal modification [-] | | 210,000 | 210,000 | 210,000 | 210,000 | 210,000 | 210,000 | 210,000 |
| | | | | Compound of formula (1) or (2) as chain transfer agent for terminal modification | Type | cis-2-Butene-1,4-diol | Maleic acid | 3-Buten-1-anine | Vinyltrimethoxy silane | Methoxy polyalkylene glycol methacrylate | 2-Methacryloyloxy ethyl acid phosphate | 2-(Methacryloyloxy) ethanesulfonic acid |
| | | Composition for electrochemical device | Nitrile polymer | | Corresponding formula | (2) Double-terminal modifying | (2) Double-terminal modifying | (1) Single-terminal modifying | (1) Single-terminal modifying | (1) Single-terminal modifying | (1) Single-terminal modifying | (1) Single-terminal modifying |
| | Binder composition | | | | Functional group specific structure | Hydroxyl group | Carboxyl group | Amino group | Trimethoxysilyl group | Polyethylene glycol chain | Phosphate group | Sulfo group |
| Conductive material dispersion liquid | | | | | Molecular weight [-] | 88.1 | 116.1 | 71.12 | 148.2 | 1112 | 210.12 | 194.21 |
| | | | | Weight-average molecular weight after terminal modification [-] | | 48000 | 46000 | 37000 | 38000 | 56000 | 45000 | 42000 |
| | | | | Iodine value after hydrogenation [mg/100 mg] | | 13 | 12 | 10 | 10 | 15 | 13 | 14 |
| | | | Concentration of divalent or higher-valent metal ions [ppm] | | | 200 | 200 | 200 | 200 | 200 | 200 | 200 |
| | | Solvent | Type | | | NMP | NMP | NMP | NMP | NMP | NMP | NMP |
| | | Halogenated hydrocarbon | Type | | | Chlorobenzene | Chlorobenzene | Chlorobenzene | Chlorobenzene | Chlorobenzene | Chlorobenzene | Chlorobenzene |
| | | | Content [mass ppm] | | | 50 | 50 | 50 | 50 | 50 | 50 | 50 |
| | Solid content concentration [mass%] | | | | | 5 | 5 | 5 | 5 | 5 | 5 | 5 |
| | Conductive material | Type | | | | CNT | CNT | CNT | CNT | CNT | CNT | CNT |
| | | BET specific surface area [m²/g] | | | | 280 | 280 | 280 | 280 | 280 | 280 | 280 |
| Evaluation | Conductive material dispersion liquid viscosity | Evaluation | | | | B | A | A | A | B | A | B |
| | | Measured value [Pa·s] | | | | 1.1 | 0.45 | 0.6 | 0.82 | 1.2 | 0.7 | 1.3 |
| | Peel strength | | | | | A | A | B | B | B | B | B |
| | Electrode flexibility | | | | | B | B | A | A | B | A | A |
| | Cycle characteristics | | | | | B | A | A | A | B | A | B |
| | Active material cracking after cycling | | | | | A | A | A | B | B | A | A |

**[Table 2]**

| | | | | | | Example 8 | Example 9 | Example 10 | Example 11 | Comparative Example 1 | Comparative Example 2 | Comparative Example 3 | Comparative Example 4 | Comparative Example 5 |
|---|---|---|---|---|---|---|---|---|---|---|---|---|---|---|
| | | | | Type | | HNBR | HNBR | HNBR | HNBR | HNBR | HNBR | HNBR | HNBR (not terminal modified) | HNBR (not terminal modified) |
| | | | | Weight-average molecular weight before terminal modification [-] | | 210,000 | 210,000 | 210,000 | 210,000 | 210,000 | 210,000 | 210,000 | 35000 | 35000 |
| | | | | Compound of formula (1) or (2) as chain transfer agent for terminal modification | Type | cis-2-Butene-1,4-diol | cis-2-Butene-1,4-diol | cis-2-Butene-1,4-diol | cis-2-Butene-1,4-diol | 1-Hexene | cis-2-Butene-1,4-diol | cis-2-Butene-1,4-diol | - | - |
| | | Composition for electrochemical device | Nitrile polymer | | Corresponding formula | (2) Double-terminal modifying | (2) Double-terminal modifying | (2) Double-terminal modifying | (2) Double-terminal modifying | - | (2) Double-terminal modifying | (2) Double-terminal modifying | - | - |
| | Binder composition | | | | Functional group/ specific structure | Hydroxyl group | Hydroxyl group | Hydroxyl group | Hydroxyl group | - | Hydroxyl group | Hydroxyl group | - | - |
| Conductive material dispersion liquid | | | | | Molecular weight [-] | 88.1 | 88.1 | 88.1 | 88.1 | 84.16 | 88.1 | 88.1 | - | - |
| | | | | Weight-average molecular weight after terminal modification [-] | | 48000 | 48000 | 120000 | 8000 | 36000 | 48000 | 48000 | - | - |
| | | | | Iodine value after hydrogenation [mg/100 mg] | | 13 | 13 | 22 | 5 | 9 | 13 | 13 | - | - |
| | | | Concentration of divalent or higher-valent metal ions [ppm] | | | 5 | 3500 | 220 | 210 | 200 | 3 | 4700 | 230 | 250 |
| | | Solvent | Type | | | NMP | NMP | NMP | NMP | NMP | NMP | NMP | NMP | NMP |
| | | Halogenated | Type | | | Chlorobenzene | Chlorobenzene | Chlorobenzene | Chlorobenzene | Chlorobenzene | Chlorobenzene | Chlorobenzene | None | None |
| | | hydrocarbon | Content [mass ppm] | | | 50 | 50 | 50 | 50 | 50 | 50 | 50 | 0 | 0 |
| | Solid content concentration [mass%] | | | | | 5 | 5 | 5 | 5 | 5 | 5 | 5 | 5 | 5 |
| | Conductive material | Type | | | | CNT | CNT | CNT | CNT | CNT | CNT | CNT | CNT | CNT |
| | | BET specific surface area [m²/g] | | | | 280 | 280 | 280 | 280 | 280 | 280 | 280 | 280 | 280 |
| Evaluation | Conductive material dispersion liquid viscosity | Evaluation | | | | A | B | C | A | B | B | C | D | B |
| | | Measured value [Pa·s] | | | | 0.8 | 4.4 | 6.2 | 0.75 | 1.3 | 1.2 | 7.3 | 12 | 1.3 |
| | Peel strength | | | | | B | A | A | C | C | D | B | A | D |
| | Electrode flexibility | | | | | B | B | B | B | C | B | D | D | B |
| | Cycle characteristics | | | | | A | C | B | B | B | B | D | D | B |
| | Active material cracking after cycling | | | | | B | A | B | B | D | D | A | D | D |

It can be seen from Tables 1 and 2 that it was possible to increase flexibility of an obtained electrode and inhibit cracking of an electrode active material in the electrode when using the compositions for an electrochemical device of Examples 1 to 11, which each contain a polymer that includes a nitrile group-containing monomer unit and either or both of a conjugated diene monomer unit and an alkylene structural unit and that has a structure derived from a specific compound on at least one terminal and in each of which the concentration of divalent or higher-valent metal ions is not less than 5 mass ppm and not more than 4,000 mass ppm.

### INDUSTRIAL APPLICABILITY

According to the present disclosure, it is possible to provide a composition for an electrochemical device and a method of producing the same that can increase flexibility of an obtained electrode and inhibit cracking of an electrode active material in the electrode.

Moreover, according to the present disclosure, it is possible to provide a binder composition for an electrochemical device, a conductive material dispersion liquid for an electrochemical device, and a slurry for an electrochemical device electrode that can increase flexibility of an obtained electrode and inhibit cracking of an electrode active material in the electrode.

Furthermore, according to the present disclosure, it is possible to provide an electrode for an electrochemical device that has excellent flexibility and little occurrence of electrode active material cracking and an electrochemical device that includes this electrode for an electrochemical device.

## Claims

1. A composition for an electrochemical device comprising a polymer including a nitrile group-containing monomer unit and either or both of a conjugated diene monomer unit and an alkylene structural unit, wherein
at least one terminal of the polymer has a structure derived from a compound represented by formula (1) or (2), shown below, 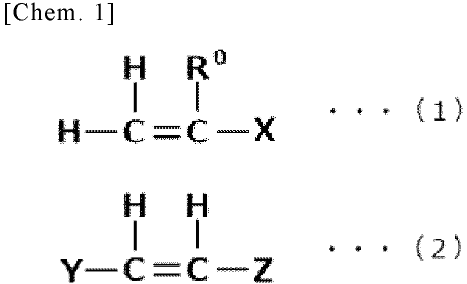 where, in formulae (1) and (2):
R⁰ is an alkyl group having a carbon number of 10 or less or a hydrogen atom;
X is a carboxyl group, a trimethoxysilyl group, an alkyl group having a carbon number of 10 or less that includes a substituent R¹, a phenyl group that includes a substituent R², CO(OCH₂CH₂)ₙ₁OR³, or CO(OCH₂CH₂)ₙ₂R⁴, where R¹ and R² are, independently of each other, a hydroxyl group, a carboxyl group, an amino group, a hydroxyphenyl group, or a methoxyphenyl group, R³ and R⁴ are, independently of each other, an alkyl group having a carbon number of 10 or less, a phosphate group, a sulfo group, or a phenyl group, and n1 and n2 are, independently of each other, an integer of not less than 1 and not more than 100;
Y is a carboxyl group or an alkyl group having a carbon number of 2 or less that optionally includes a substituent R⁵, where R⁵ is a hydroxyl group or a carboxyl group; and
Z is a carboxyl group or an alkyl group having a carbon number of 10 or less that includes a substituent R⁵, where R⁵ is a hydroxyl group or a carboxyl group, and
concentration of divalent or higher-valent metal ions contained in the composition for an electrochemical device is not less than 5 mass ppm and not more than 4,000 mass ppm.

2. A method of producing a composition for an electrochemical device that contains a polymer including a nitrile group-containing monomer unit and either or both of a conjugated diene monomer unit and an alkylene structural unit, comprising:
modifying at least one terminal of a polymer including a nitrile group-containing monomer unit and either or both of a conjugated diene monomer unit and an alkylene structural unit using a compound derived from formula (1) or (2), shown below, 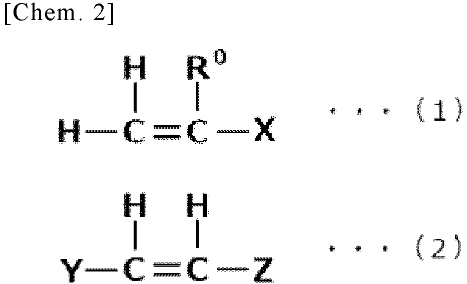 where, in formulae (1) and (2),
R⁰ is an alkyl group having a carbon number of 10 or less or a hydrogen atom,
X is a carboxyl group, a trimethoxysilyl group, an alkyl group having a carbon number of 10 or less that includes a substituent R¹, a phenyl group that includes a substituent R², CO(OCH₂CH₂)ₙ₁OR³, or CO(OCH₂CH₂)ₙ₂R⁴, where R¹ and R² are, independently of each other, a hydroxyl group, a carboxyl group, an amino group, a hydroxyphenyl group, or a methoxyphenyl group, R³ and R⁴ are, independently of each other, an alkyl group having a carbon number of 10 or less, a phosphate group, a sulfo group, or a phenyl group, and n1 and n2 are, independently of each other, an integer of not less than 1 and not more than 100,
Y is a carboxyl group or an alkyl group having a carbon number of 2 or less that optionally includes a substituent R⁵, where R⁵ is a hydroxyl group or a carboxyl group, and
Z is a carboxyl group or an alkyl group having a carbon number of 10 or less that includes a substituent R⁵, where R⁵ is a hydroxyl group or a carboxyl group; and
purifying a composition obtained through the modifying such that concentration of divalent or higher-valent metal ions is not less than 5 mass ppm and not more than 4,000 mass ppm.

3. A binder composition for an electrochemical device comprising: the composition for an electrochemical device according to claim 1; N-methyl-2-pyrrolidone; and a halogenated hydrocarbon.

4. A conductive material dispersion liquid for an electrochemical device comprising: the composition for an electrochemical device according to claim 1 or the binder composition for an electrochemical device according to claim 3; and a conductive material.

5. The conductive material dispersion liquid for an electrochemical device according to claim 4, wherein the conductive material is one or more carbon nanotubes.

6. A slurry for an electrochemical device electrode comprising at least: the conductive material dispersion liquid for an electrochemical device according to claim 4; and an electrode active material.

7. An electrode for an electrochemical device comprising an electrode mixed material layer formed using the slurry for an electrochemical device electrode according to claim 6 on a current collector.

8. An electrochemical device comprising the electrode for an electrochemical device according to claim 7.
